# EUROPEAN PATENT SPECIFICATION

(11) **EP 0 377 723 B1**
(45) Date of publication and mention of the grant of the patent: **22.11.1995**
(21) Application number: 89907762.2
(22) Date of filing: 29.06.1989
(51) Int. Cl.: F02C 6/18, F26B 23/02

(54) **DRYING METHOD IN A POWER-PLANT PROCESS AND DRYER USED IN THE METHOD**
TROCKNUNGSVERFAHREN IN KRAFTWERKEN SOWIE TROCKNER
PROCEDE DE SECHAGE UTILISE DANS LE FONCTIONNEMENT D'UNE CENTRALE ELECTRIQUE ET SECHEUR UTILISE DANS LEDIT PROCEDE

(30) Priority: 30.06.1988 FI 883125; 30.06.1988 FI 883126
(43) Date of publication of application: 18.07.1990
(73) Proprietor: IMATRAN VOIMA OY, SF-00101 Helsinki (FI)
(72) Inventor: RAIKO, Markku, SF-02100 Espoo (FI); ÄIJÄLÄ, Martti, SF-00440 Helsinki (FI); HUTTUNEN, Ilkka, SF-00560 Helsinki (FI)
(74) Representative: Clifford, Frederick Alan
(86) International application number: FI8900126
(87) International publication number: WO9000223

(56) References cited:
- EP-A- 0 129 631
- EP-A- 0 278 609
- GB-A- 1 140 757
- SE-A- 0 419 974
- US-A- 2 677 237

## Description

The invention concerns a drying method in a power-plant process and a dryer used in the method.

At present, material chat contains water is, as a rule, dried as unpressurized. Likewise, a fuel that contains water is burned as unpressurized, e.g. in a grace furnace, by dust burning, or by fluid bed combustion. In the prior-art solutions of equipment, the dryer process and the power-plant process are not interconnected in an optimal way in view of the overall efficiency of the process. The process connections between the dryers and the combustion equipment have not been carried into effect in the best way possible. The drying methods predominant to-day and the dryers employed in same are, on the whole, not suitable for pressurized combustion or gasification methods.

The present-day drying methods are uneconomical mainly because of the high cost of the pre-drying of wet fuel. Nor are the turbine and dryer solutions economical in their present forms.

At present, a solid material, e.g. peat, wood chips or coal, is dried as unpressurized. The burning takes place in a grate furnace, by dust burning or by fluid bed combustion. In more advanced gas-turbine power plants, water steam is fed as injection steam into the gas turbine. Thereat both the mass flow through the gas turbine and the specific heat of the gas become higher, and the output obtained from the shaft of the gas turbine and the efficiency of the process are increased. However, the prior-art solutions do not permit an optimal efficiency for the drying and for the whole process.

US-A-2,677,237 discloses a gas turbine power plant utilising solid water-bearing fuel comprising a fuel drier to which hot compressed air and said fuel are supplied and in which at least part of the water content of the fuel is evaporated, a combustion chamber receiving said evaporated water content and solid fuel from the drier and a turbine receiving the combustion products and evaporated water content from the combustion chamber.

GB 2,036,787A discloses a process for the drying of solid fuels from water-containing organic materials. The process comprises drying the material with steam at superatmospheric pressure, and recycling part of the steam to a pre-heating stage prior to a final mechanical dewatering stage. The dried material is then combusted in a power plant to produce high pressure steam to drive one or more turbines. Part of the high pressure steam produced is also used to dry the material.

The object of the invention is to find an improvement for the drying of a water-containing material. In the invention it has been realized to form the dryer as a pressurized dryer, the steam produced in the drying in said dryer being passed as injection steam to a gas turbine.

The steam produced in the pressurized dryer is passed into the combustion chamber of the gas turbine, where it substitutes for part of the air arriving through the compressor. At the same time, the power requirement of the compressor is reduced and an increased proportion of the turbine output is converted to generator power. The net output obtained from the gas turbine is increased even by about 40 per cent. Thereat, the efficiency of the gas turbine is increased by about 25 per cent as a result of the fact that he ultimate temperature of the flue gases is lowered.

An abundance of air is needed because by its means the temperature in the combustion chamber is kept at the desired level, i.e. at a level that is tolerated by the materials. When air is substituted for, for the purpose of cooling, by steam, the power required for the compressing of the air becomes lower, and more power is available to the generator. The generation of steam requires thermal power, and some energy is required for operation of the pump in order to pump the water entering into the vaporizer. The energy required by the pump is, however, just a fraction of what would be required by compressing.

In accordance with the present invention, there is provided method for the drying of a water-containing material in a power-plant process, in which method the water-containing material to be dried is introduced into a pressurized dryer and thermal energy is supplied for the drying of the water-containing material, and in which method a positive pressure of about 5-50 bars is introduced into the dryer by means of formation of steam, whereby the steam produced in the drying is, partly, passed along a separate duct as injection steam into the combustion unit of a gas turbine, characterised in that the steam is partly circulated through a superheater where it is superheated by gas turbine exhaust thermal energy, and in that the superheated steam is recirculated into the drier to the material to be dried where it delivers thermal energy for the drying of the water-containing material, so that gas turbine exhaust thermal energy is supplied to the drier for drying of water containing material.

The superheater may act as a waste heat boiler or heat recovery device.

A solid, sludge-like or liquid material may be dried by means of the device by circulating the steam produced in the drying so that at least part of the steam produced out of the fuel is passed back into the dryer, and by means of said steam the material to be dried may be fluidized or made to bubble. The supply of energy to the dryer may take place at least partly through tubes placed in the layer to be dried by making flue gases of the gas turbine flow in the tubes. When a gaseous material is made to flow, no change in phase takes place in said medium.

At least part of the steam produced in the drying is passed as injection steam to the gas turbine into its combustion device.

In accordance with a second aspect of the present invention there is provided a dryer used in the drying of a water-containing material, which dryer comprises an inner space in a pressurized dryer, into which the water-containing material to be dried is passed, the dryer comprising a means for the transfer of the thermal energy required in the drying to the material to be dried and in which a connecting duct is provided out of the inner space in the dryer; into which the water-containing material to be dried has been supplied for drying, for passing the steam produced in the drying to a gas turbine as injection steam, characterised in that the dryer comprises in conjunction therewith a steam circulation circuit which includes a superheater where the circulated steam is superheated by gas turbine exhaust thermal energy, and in that recirculation ducting is provided whereby that the steam released in the drying is not only passed into a combustion unit of the gas turbine to serve as injection steam but is also circulated from the dryer into the superheater and from the superheater back to among the material to be dried in the dryer so that gas turbine exhaust thermal energy is supplied to the drier for drying of water containing material.

In the following, the invention will be described with reference to some advantageous embodiments of the invention illustrated in the figures in the accompanying drawing, the invention being, however, not supposed to be confined to said embodiments alone.

Figure 1 is a schematical illustration of an industrial process, not showing the features of the present invention, which comprises a pressurized dryer and a gas turbine which produces electricity.

Figure 2 is a schematical illustration of a process according to the present invention.

Figure 3 is a schematical illustration of an industrial process, not showing the features of the present invention, of a combination of a pressurized dryer and a gas turbine, wherein the waste heat of the flue gases from the gas turbine is utilized in the drying of a water-containing material for the industrial process.

Figure 4 is a cross-sectional view of a dryer, not showing all the features of the present invention, which may be used in the present invention.

Figure 5 shows a section taken along the line I-I in Fig.4

Figure 6 shows an embodiment of the invention wherein the superheater is fitted in the steam circulation circuit.

Figures 7A to 7C illustrate arrangements for the introduction of the material to be dried into the dryer.

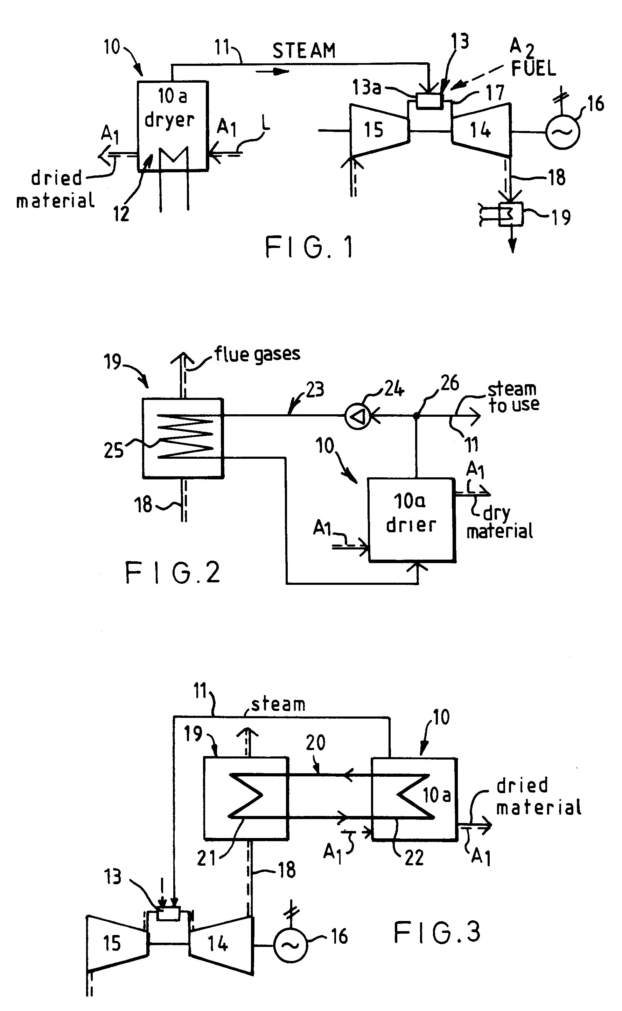

Figure 1 shows a prior art process in which the improvements of the present invention are to be incorporated.

As is shown in Fig. 1, the water-containing material A to be dried is passed in the way denoted by the arrow L into the pressurized dryer 10. In the present application, pressurization means that a positive pressure, in relation to the atmospheric pressure, has been produced into the dryer 10 by means of generation of steam. The positive pressure is typically within the range of 5...50 bars. The thermal energy is passed into the heat exchanger 12, and the thermal energy is transferred into the material to be dried. On the whole, it is possible to use any water-containing material to be dried whatsoever. The drying takes place in the dryer 10 at the pressure of the combustion chamber of the gas turbine. The moisture contained in the material A₁ to be dried is obtained as a medium in the process by passing it along the duct 11 into the combustion chamber 13a in the combustion or gasification device 13. In the pressurized dryer 10, the moist material is dried, e.g., to a moisture content of 20 %. The combustion device 13 can be accomplished with clean fuel or with fuel that contains ashes, either with direct combustion, or such a solution is also possible wherein direct combustion is replaced by gasification or partial gasification of the fuel and by combustion of the gas produced.

The steam that is passed from the dryer 10 along the duct 11 is, thus, passed into the combustion chamber 13a in the combustion unit 13 of the gas turbine 14. In the combustion chamber 13a, said steam is substituted for part of the air that arrives through the compressor 15. At the same time, the power requirement of the compressor 15 is reduced, and an increased proportion of the output of the gas turbine is converted to generator 16 power.

An abundance of air is needed because by its means the temperature in the combustion chamber 13a is kept at the desired level, i.e. at a level that is tolerated by the materials. When air is substituted for, for the purpose of cooling, by steam, the power required for the compressing of the air becomes lower, and more power is available to the generator. The generation of steam requires thermal power.

From the dryer 10 the dried material A₁ is transferred to other use in an industrial process, e.g. to constitute raw-material for particle board or directly to some boiler furnace of an industrial process and/or to the combustion device 13 shown in Fig 1 and provided for the gas turbine 14, in which case the material A₁ is material A₂. The dryer 10 may also operate as the dryer for an intermediate or final product of some industrial process.

The combustion device 13 comprises a combustion chamber 13a pressurized by means of a compressor 15. The compressor 15 produces the necessary combustion air, which is passed into the combustion device 13 through a system of compressed-air pipes 11. The compressor 15 raises the pressure, e.g., to about 12 bars, an equally high pressure being also produced by means of generation of steam in the dryer 10 in its inner drying space 10a. At said pressure, the air is then passed into the combustion device 13 into its combustion chamber 13a. As a result of the combustion of the fuel A₂, the mixture of air and of the flue gases produced during combustion of the fuel is heated to about 850...1200^{o}C. At least part of the steam that was separated from the wet material A₁ introduced into the dryer 10 is passed into the combustion device 13 into its combustion chamber 13a along the steam pipe 11. The objective of the supply of steam is regulation of the ultimate temperature in the combustion chamber, whereby it replaces some of the excess air that is normally required. Owing to the supply of steam, the compressor power is reduced and the net output of the process becomes higher.

The flue gases are passed further along the flue-gas pipe system 17 to the gas turbine 14, where the gases expand and generate kinetic energy. By means of the kinetic energy, the compressor 15 placed on the same shaft as well as the genarator 16 are rotated, said generator producing electricity. The output obtained from the gas turbine 14 is higher than the power required by the compressor 15, the extra output being recovered from the generator 16 of the gas turbine 14. After the gas turbine 14, the flue gases are passed along the duct 18 to a separate waste-heat recovery device 19, e.g. to a waste-heat boiler.

Fig. 2 shows the improvements of invention. The water-containing material A₁ is passed into the pressurized dryer 10, and the material is fluidized by means of the circulation steam in a steam atmosphere. The steam produced in the drying is circulated in the circuit 23 by means of a steam blower 24. The steam is circulated through the heat exchanger 25, which is fitted in the heat-recovery device 19, e.g. in a waste-heat boiler for flue gases. The dried material A₁ is removed from the top portion of the dryer 10. Part of the steam is taken from the circuit 23 for circulation of the heat-transfer medium through the distribution point 26 into the duct 11 and further to other use, e.g., exactly for injection steam for the gas turbine 14. In the dryer 10 itself, in its drying space 10a, no separate heat-exchanger pipe systems are needed.
The invention can also be applied to a combined power plant which includes a steam turbine that produces electricity, in addition to a gas turbine. In such a case, the thermal energy required for drying can be taken exclusively or partly from bled steams of the steam turbine.
Fig. 3 shows an arrangement not having all the features of the invention but which can be used in the invention, in which the device 19 for recovery of the heat from the flue gases after the gas turbine is used as a source of the energy passed to the pressurized dryer 10. Between the pressurized dryer 10 and the heat-recovery device 19 there is a heat-transfer circuit 20. In the heat-transfer circuit 20, it is possible to circulate, e.g., water. From the flue gases, the heat is transferred in the waste-heat boiler, in the heat exchanger 21, into the water in the circuit 20, and the water is circulated in the dryer 10, in its heat exchanger 22, whereby the thermal energy obtained from the flue games is transferred in the heat exchanger 22 into the material A₁ to be dried. The steam produced in the dryer 10 is passed further along the duct 11 into the gas turbine 14, into its pressurized pare, into the combustion or gasification device 12, to constitute injection steam.

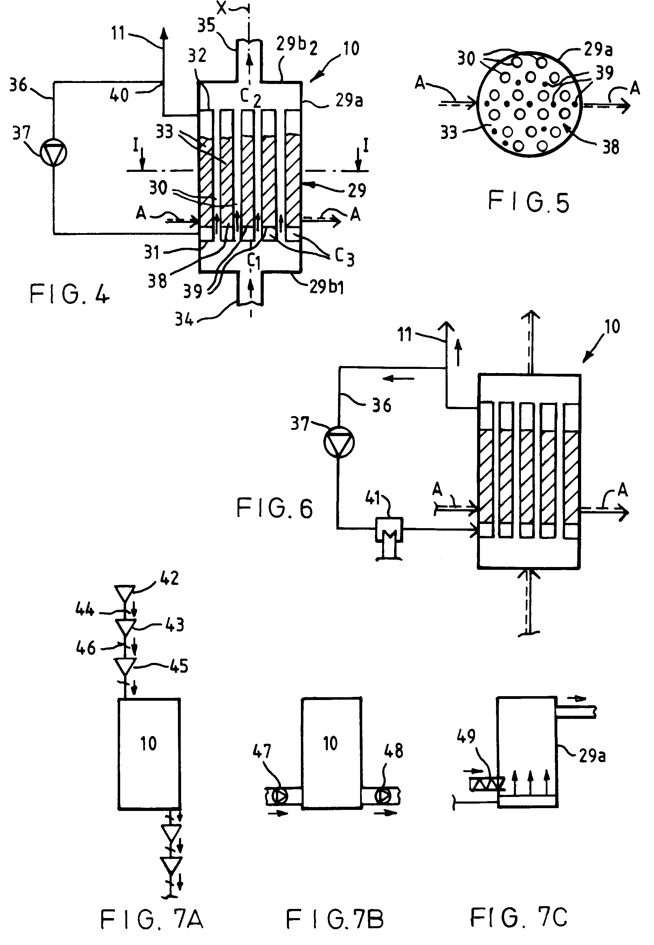

Fig. 4 shows a dryer, not showing all the features of the invention but which can be used in the invention, as an illustration of principle only, and as a cross-sectional view. If the arrangement shown in Fig. 5 is incorporated in the dryer shown in Fig. 4, an arrangement according to the invention will be obtained.

The dryer 10 comprises an outer mantle 29, advantageously consisting of a circular cylindrical mantle portion 29a and of end parts 29b₁ and 29b₂. The longitudinal axis X of the dryer is vertical. Inside the mantle 29 of the dryer 10, heat transfer tubes 30 are fitted. The heat transfer tubes 30 are fixed at their ends, in the lower part of the dryer to the perforated plate 31 and in the upper part of the dryer to the perforated place 32. Between the cylindrical mantle portion 29a of the dryer 10, the heat transfer tubes 30, and the plates 31 and 32, a space 33 remains for the material A to be dried. The heat transfer medium, advantageously the flue gases of the gas turbine 14, is passed along the duct 34 into the space C₁ between the plate 31 and the end part 29b₁ of the mantle portion of the dryer, from which space the flue gases pass along the straight tubes 30 into the space C₂ between the other plate 32 and the end part 29b₂ and further along the duct 35 out of the dryer 10. The heat is transferred out of the flue gases into the material A to be dried. The steam that is produced in the drying out of the material A that contains water, e.g. fuel, is passed along the duct 36 from the top portion of the space 33, being circulated by the steam blower 37, back into the dryer 10 into the bottom portion of the space 33. By means of said steam produced out of the material to be dried, the material A to be dried is fluidized or made to bubble. The material A is passed into the space 33 onto the nozzle plate 38. The steam is passed along the duct 36 into the space C₃ between the plate 31 and the nozzle plate 38, from which space it is passed through the nozzle openings 39 into the material A to be dried, present in the space 33. Through the nozzle openings 39, the steam is distributed uniformly into the material to be dried. When the steam is passed from underneath into the material layer to be dried, the material A to be dried, placed on the plate 38, is fluidized or made to bubble.

The steam circulation circuit 36 is provided with a branching point 40 for passing steam along the duct 11, at least partly, to the gas turbine 14 into the combustion unit 13 or gasification unit, as injection steam. The steam and its energy can also be utilized otherise. The steam can be passed, e.g., into superheaters in the steam circuit of a steam turbine process, into heat exchangers, etc.

Fig. 5 is a sectional view taken along the line I-I in Fig.4. The water-containing material to be dried is introduced into the space 33 between the dryer mantle 29a and the heat transfer tubes 30. The heat transfer tubes 30 are advantageously straight tubes, whereby flow losses are minimized. The space 33 is advantageously pressurized, e.g., to a pressure of 12 bars. In said space, the material to be dried is substantially in a steam atmosphere.

Fig. 6 shows an embodiment of the invention wherein steam of the steam circulation circuit 36 is superheated in a superheater 41. The energy for the superheating is obtained from the exhaust gases of the gas turbine process, and optionally also from the intercooling of the compressor or from somewhere else.

In the figures referred to above, such an embodiment is possible in which the tubes 30 passing through the layer 33 to be dried are at least partly insulated so as to restrict the surface temperature at the contact point between the material to be dried and the tube 30. Advantageously, this insulation is carried out at the tube portions at which the temperature of the flue gases is highest.

Fig. 7A shows a solution for the feed and removal of the fuel in a dryer which comprises a vertically mounted cylindrical mantle and heat transfer tubes 30 passing through same. Fig. 7A shows the feed of a solid material to be dried into the pressurized dryer 10. The feed takes place as follows. The solid material is fad into an unpressurized feed silo 42. Out of the feed silo 42, the material to be dried is made to flow by the effect of gravity into the tank 43 placed underneath, which operates as unpressurized or pressurized, as is necessary. Between the tanks there is a pressure-tight closing device 44. Out of this tank 43, the material to be dried is made to flow further into the next tank 45, which is all the time under pressure. Before the flowing of the material starts, the pressure level in the intermediate tank must be raised to the same level at which the pressure in the dryer is. Between the tanks there is a pressure-tight closing device 46. After the intermediate tank has been emptied, the closing member placed at its bottom side is closed, and the pressure in the intermediate tank is discharged. The valve placed above the intermediate tank is opened to fill the intermediate tank. The removal of the dry material out of the device takes place by means of devices similar to those used for the feed, only the sequence of the operations is reversed.

Fig. 7B shows a solution for the feed and removal of a sludge-like material into and out of the dryer. The sludge-like material is introduced by means of the pump 47 and removed by means of the outlet pump 48 along ducts of its own.

Fig. 7C shows a solution for the introduction of a material to be dried that must be fluidized into the dryer 10. The material is passed by means of a screw conveyor 49 through the dryer mantle 29a, and the dried material is removed from the top portion of the dryer from above the fluid bed. It is an advantage of this solution that in the fluidization any heavy particles of impurities remain on the bottom of the fluid bed and can be removed from there separately.

## Claims

1. Method for the drying of a water-containing material in a power-plant process, in which method the water-containing material to be dried is introduced into a pressurized dryer (10) and thermal energy is supplied for the drying of the water-containing material, and in which method a positive pressure of about 5-50 bars is introduced into the dryer (10) by means of formation of steam, whereby the steam produced in the drying is, partly, passed along a separate duct as injection steam into the combustion unit (13) of a gas turbine (14), characterised in that the steam is partly circulated through a superheater where it is superheated by gas turbine exhaust thermal energy, and in that the superheated steam is recirculated into the dryer to the material to be dried where it delivers thermal energy for the drying of the water-containing material, so that gas turbine exhaust thermal energy is supplied to the drier for drying of water containing material.

2. Method as claimed in claim 1, characterized in that the thermal energy needed for the drying of the material is taken from the waste heat in the flue gases of the gas turbine (14).

3. Method as claimed in claim 1 or 2 for the drying of a water-containing material in a power-plant process, characterized in that the water-containing material (A;A₁) is passed into the pressurized space (33) in the dryer (10), which said space is defined by heat transfer tubes (30), in which said tubes a gaseous material, advantageously flue gases from the gas turbine, is made to flow, from which said gases the heat is transferred into the material to be dried, and that in the method the material to be dried is during the drying substantially in a steam atmosphere and the steam is circulated in a steam circulation circuit (36), at least part of the steam being passed as injection steam into the gas turbine (14) which produces electricity.

4. Method in accordance with any of preceding claims 1 to 3, characterized in that the material to be dried is made to bubble or fluidized in a steam atmosphere by passing the circulation steam through nozzle openings (39) or equivalent in a nozzle plant (38) to underneath the material to be dried.

5. A dryer used in the drying of a water-containing material, which dryer (10) comprises an inner space (10a) in a pressurized dryer (10), into which the water-containing material (A₁) to be dried is passed, the dryer (10) comprising a means (19) for the transfer of the thermal energy required in the drying to the material to be dried, and in which a connecting duct (11) is provided, out of the inner space in the dryer (10), into which the water-containing material (A₁) to be dried has been supplied for drying, for passing the steam produced in the drying to a gas turbine (14) as injection steam, characterised in that the dryer (10) comprises in conjunction therewith a steam circulation circuit which includes a superheater where the circulated steam is superheated by gas turbine exhaust thermal energy, and in that recirculation ducting is provided whereby that the steam released in the drying is not only passed into a combustion unit (13) of the gas turbine (14) to serve as injection steam but is also circulated from the dryer (10) into the superheater, and from the superheater hack to among the material to be dried in the dryer so that gas turbine exhaust thermal energy is supplied to the drier for drying of water containing material.

6. Dryer as claimed in the preceding claim, characterized in that the dryer comprises a heat- transfer circuit for transfer of heat out the exhaust gases of the gas turbine.

7. Dryer as claimed in claim 5 or 6, characterized in that the dryer (1) comprises a circuit between the heat-recovery device (19) and the pressurized drying space (10), and a steam blower (24), whereby the steam produced in the drying of the water-containing material is passed by means of the steam blower into the heat-recovery device (19), advantageously a waste-heat boiler for flue gases, and from there further into the dryer (10) into the space (10a) for the drying of the material, and that the dryer (10) further comprises a duct (11) passing from said steam-circulation circuit, through which duct (11) at least part of the steam can be passed to the gas turbine (14) as injection steam.

## Patentansprüche

1. Verfahren zur Trocknung eines wasserhaltigen Werkstoffes in einem Kraftwerksprozeß, bei welchem Verfahren der zu trocknende wasserhaltige Werkstoff in einen unter Druck stehenden Trockner (10) eingeführt wird und Wärmeenergie für die Trocknung des wasserhaltigen Werkstoffes zugeführt wird, und in welchem Verfahren ein Überdruck von etwa 5-50 bar in den Trockner (10) eingespeist wird, und zwar durch Dampfbildung, wodurch der bei der Trocknung erzeugte Dampf teilweise entlang einer einzelnen Leitung als Einspritzdampf in die Verbrennungseinheit (13) einer Gasturbine (14) geleitet wird, dadurch gekennzeichnet, daß der Dampf teilweise durch einen Überhitzer zirkuliert wird, in welchem er mittels der Gasturbinenabgas-Abwärmeenergie überhitzt wird, und daß der überhitzte Dampf in den Trockner zu dem zu trocknenden Werkstoff zirkuliert wird, wo es für die Trocknung des wasserhaltigen Wassers Wärmeenergie liefert, so daß die Gasturbinen-Abwärmeenergie zu dem Trockner zugeführt wird, um wasserhaltigen Werkstoff zu trocknen.

2. Verfahren nach Anspruch 1, dadurch gekennzeichnet, daß die für die Trocknung des Werkstoffes benötigte Warmeenergie von der Abwärme in den Angasen der Gasturbine (14) genommen wird.

3. Verfahren nach Anspruch 1 oder 2 für die Trocknung eines wasserhaltigen Werkstoffes in einem Kraftwerkprozeß, dadurch gekennzeichnet, daß der wasserhaltige Werkstoff (A;A₁) in den unter Druck stehenden Raum (33) in dem Trockner (10) geleitet wird, wobei der Raum mittels Wärmeübertragungsröhren (30) definiert ist, wobei in den Röhren ein gasförmiger Werkstoff, vorteilhafterweise Abgase von der Gasturbine zum Strömen gebracht werden, wobei von den Gasen aus die Wärme in den zu trocknenden Werkstoff zu übertragen ist, und daß sich bei dem Verfahren der zu trocknende Werkstoff während der Trocknung im wesentlichen in einer Dampfatmosphäre befindet und der Dampf in einem Dampfkreislauf (36) zirkuliert wird, wobei zumindest ein Teil des Dampfes als Einspritzdampf in die Gasturbine (14) geleitet wird, welche Strom erzeugt.

4. Verfahren nach einem der vorhergehenden Ansprüche 1 bis 3, dadurch gekennzeichnet, daß der zu trocknende Werkstoff bläschenartig hergestellt ist oder in einer Dampfatmosphäre durch Leiten des Umlaufdampfes durch Düsenöffnungen (39) oder dergleichen in einer Düsenanlage (38) bis unterhalb des zu trocknenden Werkstoffes fluidisiert wird.

5. Trockner, der bei der Trocknung von wasserhaltigem Werkstoff verwendet wird, mit einem Innenraum (10a) in einem unter Druck stehenden Trockner (10), in welchem der zu trocknende wasserhaltige Werkstoff (A₁) geleitet wird, wobei der Trockner (10) eine Einrichtung (19) für die Übertragung des bei der Trocknung erforderlichen Wärmeenergie hat, und in welchem eine Verbindungsleitung (11) vorgesehen ist, und zwar außerhalb des Innenraumes in dem Trockner (10), in welchem der zu trocknende wasserhaltige Werkstoff (A₁) für die Trocknung zugeführt worden ist, um den bei der Trocknung erzeugten Dampf als Einspritzgas zu einer Gasturbine zu leiten, dadurch gekennzeichnet, däß der Trockner (10) in Verbindung damit einen Dampfzirkulationsschaltkreis aufweist, welcher einen Überhitzer aufweist, in welchem der zirkulierte Dampf mittels Gasturbinen-Abwärmeenergie überhitzt wird, und daß eine Umlaufleitung vorgesehen ist, wodurch der bei der Trocknung freigesetzte Dampf nicht nur in eine Verbrennungseinheit (13) der Gasturbine (14) geleitet wird, um als Einspritzdampf zu wirken, sondern auch von dem Trockner (10) in den Überhitzer zirkuliert wird, und von dem Überhitzer zurück zu dem zu trocknenden Werkstoff in dem Trockner zirkuliert wird, so daß die Gasturbinen-Abwärmeenergie zu dem Trockner gespeist wird, um den wasserhaltigen Werkstoff zu trocknen.

6. Trockner nach dem vorhergehenden Anspruch, dadurch gekennzeichnet, daß der Trockner einen Wärmeübertragungsschaltkreis für die Übertragung von Wärme aus den Abgasen der Gasturbine aufweist.

7. Trockner nach Anspruch 5 oder 6, dadurch gekennzeichnet, daß der Trockner (1) einen Schaltkreis zwischen der Wärmeaufbereitungsvorrichtung (19) und dem unter Druck stehenden Raum (10) und ein Dampfgebläse (24) aufweist, wodurch der bei der Trocknung des wasserhaltigen Werkstoffes erzeugte Dampf mittels des Dampfgebläses in die Wärmeaufbereitungsvorrichtung (19) geleitet wird, und zwar vorteilhafterweise in einen Abwärmekessel für Abgase, und von dort aus weiter in den Trockner (10) in den Raum (10a) für die Trocknung des Werkstoffes, und daß der Trockner (10) ferner eine Leitung (11) aufweist, welche sich von dem Dampfumlaufschaltkreis aus erstreckt, durch welche Leitung (11) zumindest ein Teil des Dampfes als Einspritzdampf zur Gasturbine (14) geleitet werden kann.

## Revendications

1. Procédé de séchage d'un matériau contenant de l'eau utilisé dans le fonctionnement d'une centrale électrique, dans lequel le matériau contenant de l'eau est introduit dans un sécheur sous pression (10), de l'énergie thermique étant fournie pour le séchage du matériau contenant de l'eau, dans quel procédé une pression positive de l'ordre de 5 à 50 bars étant introduite dans le sécheur (10) par la formation de vapeur, la vapeur produite lors du séchage étant en partie transférée le long d'un conduit séparé sous forme de vapeur d'injection dans l'unité de combustion (13) d'une turbine à gaz (14), caractérisé en ce que la vapeur est en partie transférée à travers un surchauffeur, où elle est surchauffée par l'énergie thermique d'échappement de la turbine à gaz, et en ce que la vapeur surchauffée est retransférée dans le sécheur vers le matériau devant être séché où elle fournit de l'énergie thermique pour le séchage du matériau contenant de l'eau, de sorte que l'énergie thermique d'échappement de la turbine à gaz est fournie au sécheur pour le séchage du matériau contenant de l'eau.

2. Procédé selon la revendication 1, caractérisé en ce que l'énergie thermique nécessaire pour le séchage du matériau est prélevée de la chaleur perdue dans les gaz de fumée de la turbine à gaz (14).

3. Procédé selon les revendications 1 ou 2 pour le séchage d'un matériau contenant de l'eau utilisé dans le fonctionnement d'une centrale électrique, caractérisé en ce que la matériau contenant de l'eau (A: A₁) est transféré dans l'espace sous pression (33) dans le sécheur (10), ledit espace étant défini par des tuyaux de transfert de chaleur (30), un matériau gazeux, de préférence des gaz de fumée de la turbine à gaz, étant mis en circulation dans lesdits tubes, la chaleur desdits gaz étant transférée dans le matériau devant être séché, et en ce que dans le procédé le matériau devant être séché se trouve pratiquement dans une atmosphère de vapeur au cours du séchage, la vapeur étant mise en circulation dans un circuit de circulation de vapeur (36), au moins une partie de la vapeur étant transférée comme vapeur d'injection dans la turbine à gaz (14) produisant de l'électricité.

4. Procédé selon l'une quelconque des revendications 1 à 3, caractérisé en ce que le matériau devant être séché est mis en ébullition ou fluidifié dans une atmosphère de vapeur par le transfert de la vapeur de circulation à travers des ouvertures de tuyère (39) ou un dispositif similaire dans une installation à tuyères (38) jusqu'au-dessous du matériau devant être séché.

5. Sécheur utilisé pour le séchage d'un matériau contenant de l'eau, le sécheur (10) comprenant un espace interne (10a) dans un sécheur sous pression (10), dans lequel est transféré le matériau contenant de l'eau (A₁) devant être séché, le sécheur (10) comprenant un moyen (19) pour le transfert de l'énergie thermique nécessaire pour le séchage du matériau devant être séché, et dans lequel un conduit de connexion (11) est agencé en-dehors de l'espace interne du sécheur (10), dans lequel le matériau contenant de l'eau (A₁) devant être séché a été transféré pour le séchage, pour transférer la vapeur produite lors du séchage vers une turbine à gaz (14) sous forme de vapeur d'injection, caractérisé en ce que le sécheur (10) comprend conjointement un circuit de circulation de vapeur englobant un surchauffeur où la vapeur en circulation est surchauffée par l'énergie thermique d'échappement de la turbine à gaz, et en ce qu'un conduit de recirculation est agencé, la vapeur libérée lors du séchage étant ainsi transférée non seulement dans une unité de combustion (13) de la turbine à gaz (14) pour servir de vapeur d'injection, mais également du sécheur (10) vers le surchauffeur, et retourné du surchauffeur vers le matériau devant être séché dans le sécheur, de sorte que l'énergie thermique d'échappement de la turbine à gaz est fournie au sécheur pour le séchage du matériau contenant de l'eau.

6. Sécheur selon la revendication précédente, caractérisé en ce que le sécheur comprend un circuit de transfert de chaleur pour le transfert de la chaleur à partir des gaz d'échappement de la turbine à gaz.

7. Sécheur selon les revendications 5 ou 6, caractérisé en ce que le sécheur (1) comprend un circuit entre le dispositif de récupération de chaleur (19) et l'espace de séchage sous pression (10) et une soufflante à vapeur (24), la vapeur produite lors du séchage du matériau contenant de l'eau étant ainsi transférée par l'intermédiaire de la soufflante à vapeur dans le dispositif de récupération de chaleur (19), de préférence une chaudière chauffée par la chaleur perdue des gaz de fumée, et ensuite vers le sécheur (10), dans l'espace (10a), pour le séchage du matériau, et en ce que le sécheur (10) comprend en outre un conduit (11) s'étendant à partir dudit circuit de circulation de vapeur, au moins une partie de la vapeur pouvant être transférée à travers ce conduit (11) vers la turbine à gaz (14) sous forme de vapeur d'injection.
